(19) **Europäisches Patentamt**
**European Patent Office**
**Office européen des brevets**

(11) **EP 3 150 504 B1**

(12) **EUROPEAN PATENT SPECIFICATION**

(45) Date of publication and mention
of the grant of the patent:
**29.07.2020 Bulletin 2020/31**

(51) Int Cl.:
***B29C 65/16*** *(2006.01)*     *B29C 65/82* *(2006.01)*
*B29K 67/00* *(2006.01)*     *B29K 105/32* *(2006.01)*

(21) Application number: **15833736.0**

(86) International application number:
**PCT/JP2015/072014**

(22) Date of filing: **04.08.2015**

(87) International publication number:
**WO 2016/027653 (25.02.2016 Gazette 2016/08)**

(54) **A METHOD FOR PRODUCING A TRANSPARENT PLASTIC CONTAINER**

VERFAHREN ZUR HERSTELLUNG VON EINEM BEHÄLTER AUS TRANSPARENTEM KUNSTSTOFF

PROCEDE DE PRODUCTION D'UN CONTENANT EN PLASTIQUE TRANSPARENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2014 JP 2014166336**

(43) Date of publication of application:
**05.04.2017 Bulletin 2017/14**

(73) Proprietor: **Yaita Seisakusho Co., Ltd.**
**Kawaguchi-shi, Saitama 333-0866 (JP)**

(72) Inventors:
• **YAITA Daisuke**
**Kawaguchi-shi**
**Saitama 333-0866 (JP)**

• **NAGASAWA Masamichi**
**Tokyo 101-0021 (JP)**
• **MANABE Takeshi**
**Hamamatsu-shi**
**Shizuoka 431-1202 (JP)**

(74) Representative: **Müller-Boré & Partner**
**Patentanwälte PartG mbB**
**Friedenheimer Brücke 21**
**80639 München (DE)**

(56) References cited:
**EP-A1- 2 505 338**     **JP-A- H05 247 325**
**JP-A- 2005 290 087**     **JP-A- 2007 230 051**
**JP-A- 2013 203 052**

**Description**

TECHNICAL FIELD

The present invention relates to a method for producing a transparent plastic container. In particular, the invention relates to a method for efficiently producing such transparent plastic container by laser-welding even though the transparent plastic container does not contain a significant quantity of laser absorber and has excellent transparency.

BACKGROUND ART

Recently, when various molded articles such as an automobile part, an electricity part, an electronic part, a machine part, a building part, a household part, etc. are configured, a black-based resin molded article formed using a laser welding method in place of ultrasonic welding, an adhesive, etc. has been proposed.

For example, a black-based secondary fabrication resin product has been proposed, and the resin product is formed by irradiating a surface of a resin component containing a laser-absorbent black colorant with predetermined laser through a resin product containing a laser-transmitting black colorant, and laser-welding a bonding surface (for example, see Patent Documents 1 and 2).

That is, Patent Document 1 discloses a black-based laser welding composite, etc. that can be laser-welded by containing a black dye to absorb most of an emitted laser beam.

More specifically, the laser welding composite is a laser welding resin composite containing a resin and a laser beam-absorbent colorant, and is a laser welding composite characterized in that, when laser transmittance with respect to 940 nm laser light in a state of containing a laser beam-absorbent black colorant is set to $T_{laser-absorbent\ black\ resin}$, and laser transmittance with respect to 940 nm laser light with a resin alone is set to $T_{natural\ resin}$, $T_{laser-absorbent\ black\ resin}/T_{natural\ resin}$ is within a range of 0 to 0.2, and the laser beam-absorbent black colorant contains a mixture of carbon black and a nigrosine dye.

In addition, Patent Document 2 discloses a thermo-plastic resin composite which appears black and may transmit a laser beam in a wavelength within an infrared region.

More specifically, the resin composite is a laser welding resin composite containing a resin and a laser beam-transmitting colorant, and is a laser welding resin composite in which, when laser transmittance with respect to 940 nm laser light in a state of containing a laser beam-transmitting black colorant is set to $T_{laser-transmitting\ black\ resin}$, and laser transmittance with respect to 940 nm laser light with a resin alone is set to $T_{natural\ resin}$, $T_{laser-transmitting\ black\ resin}/T_{natural\ resin}$ is within a range of 0.5 to 1.2, and the laser beam-transmitting black colorant contains an anthraquinone dye or a monoazo complex dye.

In addition, Patent Document 3 discloses a laser welding method capable of reliably sealing a container and a cover in a short time.

More specifically, in a sealing method using laser welding of the container and the cover, the sealing method is characterized in that one side includes a laser-transmittable thermo-plastic resin, the other side includes a resin composite in which a pyrogenic substance that generates heat by absorbing a laser is contained in a thermo-plastic resin, laser beam emitted from a laser irradiation device is a rectangular beam having a uniform light intensity distribution, an upper limit of a temperature that rises by laser irradiation on a welding interface between the container and the cover falls within a range above or equal to a melting point of the thermo-plastic resin and below a thermal decomposition start temperature, and an upper temperature limit is reached in a heating time t (msec) represented by Equation (1) below.

$$t\ (msec)\ =\ L/S\ \dots\ (1)$$

(In the Equation, L denotes a length (mm) of the rectangular beam in a scan direction, and S denotes a scan speed (mm/msec) of a laser below or equal to 1.65 mm/msec.)

CITATION LIST

PATENT DOCUMENT

Patent Document 1: JP 4040463 B1 (Claims)
Patent Document 2: JP 4734303 B1 (Claims)
Patent Document 3: JP 2013-203052 A (Claims)

DISCLOSURE OF THE INVENTION

PROBLEM TO BE SOLVED BY THE INVENTION

However, the black-based resin molded article, which is disclosed in Patent Document 1, including a combination of a resin that can be laser-welded, etc. lacks decorativeness, and has a problem that the black-based resin molded article is prone to be restrictively used as a cosmetics container, a medical container, etc. which require a certain level of transparency such that content is visually recognized.

In addition, the black-based resin molded article of Patent Document 2 uses a combination of an anthraquinone dye and a monoazo dye as a black dye, and has problems that a colorful container of green, blue, red, purple, etc. may not be obtained, and, in particular, the black-based resin molded article is prone to be restrictively used as a cosmetics container, a medical container, etc. which require transparency.

Further, with regard to the sealing method using laser welding of the container and the cover disclosed in Patent Document 3, a predetermined quantity of a pyrogenic substance that generates heat by absorbing a laser needs to be contained, and there is a problem that the sealing method is prone to be restrictively used for a cosmetics container, a medical container, etc. which require transparency.

EP 2 505 338 A1 describes a method for producing a transparent plastic container using a long-wavelength laser having a power of 40 to 100 W.

In this regard, as a result of a keen examination, the inventors have found that a predetermined portion, which may correspond to a combination of a main body/cover of a transparent plastic container made of a transparent resin, may be stably laser-welded in a short time without mixing a significant quantity of a laser absorber by considering a wavelength, etc. of a laser to be used, and completed the invention.

In other words, an object of the invention is to provide a method for efficiently producing a transparent plastic container formed by laser welding even though the transparent plastic container has excellent transparency.

MEANS FOR SOLVING PROBLEM

According to the method of the present invention as defined in the claims, a transparent plastic container including a cover portion made of a transparent polyester resin and a main plastic container body made of a transparent polyester resin, wherein the cover portion is welded to the main plastic container body is provided, and the above-described problems may be solved.

In other words, when a long-wavelength laser having a predetermined wavelength is used, it is possible to provide a transparent plastic container obtained by being strongly laser-welded even though the transparent plastic container does not contain a significant quantity of laser absorber and has excellent transparency.

In addition, when the transparent plastic container of the invention is configured, it is preferable that the cover portion has a protrusion pressed against an inner wall of the main plastic container body, and the protrusion is welded to a portion of the inner wall of the main plastic container body by condensed light of the long-wavelength laser.

When a shape of the cover portion, etc. is considered, and a light condensing property of the long-wavelength laser is considered as described above, it is possible to obtain an excellent laser welding property while preventing occurrence of blistering or deformation in a laser welding portion.

In addition, when the transparent plastic container obtained by the invention is configured, it is preferable that a long-wavelength laser transmittance is set to a value below or equal to 30% in the transparent polyester resin included in the cover portion and the transparent polyester resin included in the main plastic container body, or in one of the transparent polyester resins.

When a long-wavelength laser transmittance in the transparent polyester resin is considered as described above, it is possible to obtain a predetermined laser welding property while preventing occurrence of blistering or deformation in the laser welding portion.

In addition, when the transparent plastic container obtained by the invention is configured, it is preferable that the transparent polyester resin included in the cover portion and the transparent polyester resin included in the main plastic container body, or one of the transparent polyester resins contains at least one of polycyclohexanedimethylene terephthalate, alcohol-modified polycyclohexanedimethylene terephthalate, and glycol-modified polycyclohexanedimethylene terephthalate as a main component.

When a type of the transparent polyester resin is considered as described above, it is possible to further enhance the laser welding property in the cover portion and the main plastic container body when compared to another polyester resin.

According to the invention, there is provided a method for producing a transparent plastic container including a cover portion made of a transparent polyester resin having a visible light transmittance, measured in accordance with JIS R 3212, of above or equal to 70% and a main plastic container body made of a transparent polyester resin having a visible light transmittance, measured according to the same standards, of above or equal to 70%, the method comprising:

a process (1) of preparing the cover portion made of the transparent polyester resin and the main plastic container body made of the transparent polyester resin; and

a process (2) of irradiating a welding-scheduled portion of the cover portion and the main plastic container body with a long-wavelength laser having a wavelength of 1.2 to 2.5 $\mu$m and a power of 6 to 20 W for 6 to 25 seconds to weld the welding-scheduled portion.

In other words, when a long-wavelength laser having a predetermined wavelength is used, it is possible to efficiently produce a laser-welded transparent plastic container even though the transparent plastic container does not contain a laser absorber and has excellent transparency (high visible light transmittance).

In addition, when the method for producing the transparent plastic container of the invention is implemented, it is preferable that the long-wavelength laser is emitted while the cover portion and the main plastic container body are rotated in a fit state.

When the long-wavelength laser is emitted in a rotated state as described above, it is possible to obtain a predetermined laser welding property while preventing occurrence of blistering or deformation in a laser welding portion.

In addition, when the method for efficiently producing the transparent plastic container of the invention is implemented, it is preferable that the long-wavelength laser is emitted through a condensing lens.

When the long-wavelength laser is emitted through the condensing lens as described above, it is possible to control a laser absorbing property in the welding-scheduled portion, and to obtain a predetermined laser welding property while preventing occurrence of blistering or deformation.

In addition, when the method for efficiently producing the transparent plastic container of the invention is implemented, it is preferable that the long-wavelength laser is emitted while being condensed, and a focal position of the long-wavelength laser is formed behind the welding-scheduled portion.

When the focal position of the long-wavelength laser is considered, it is possible to control a laser absorbing property in the welding-scheduled portion, and to obtain a predetermined laser welding property while preventing occurrence of blistering or deformation.

BRIEF DESCRIPTION OF DRAWINGS

Fig. 1(a) is a diagram for description of a transparent plastic container, Fig. 1(b) is a diagram for description of a main plastic container body, and Fig. 1(c) is a diagram for description of a cover portion;

Figs. 2(a) to 2(c) are diagrams for description of a laser irradiation device;

Fig. 3 is a diagram for description of a laser welding method for the transparent plastic container;

Fig. 4(a) is a diagram illustrating a relation between laser light condensation and a welding-scheduled portion of the transparent plastic container, and Fig. 4(b) is a diagram illustrating a relation between laser light condensation and a welding-scheduled portion of another transparent plastic container;

Fig. 5 is a diagram for description of an influence of a wavelength of a laser on a laser welding property of the transparent plastic container; and

Fig. 6(a) is a diagram for description of an influence of laser power and a laser irradiation time in a long-wavelength laser, and Fig. 6(b) is a diagram for description of an influence of laser power and a laser irradiation time in a short-wavelength laser.

MODE(S) FOR CARRYING OUT THE INVENTION

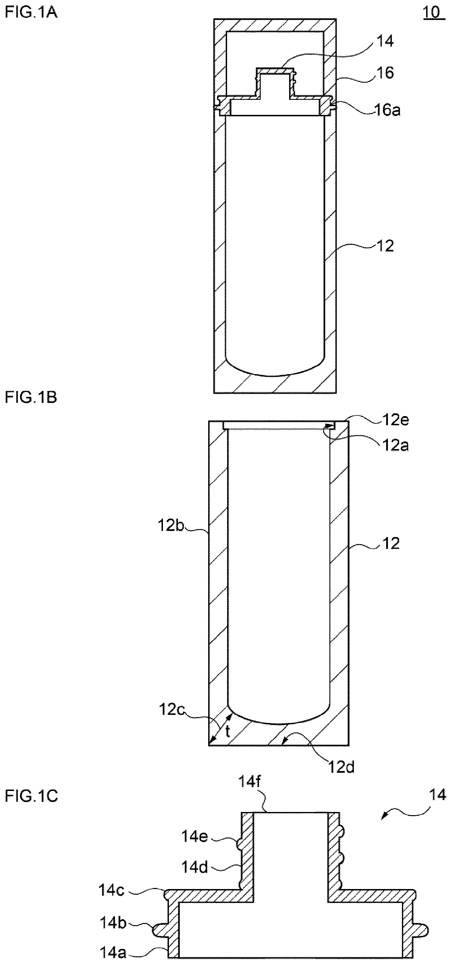

As illustrated in Figs. 1(a) to 1(c), there is disclosed a plastic container 10 including a cover portion 14 made of a transparent polyester resin and a main plastic container body 12 made of a transparent polyester resin. The transparent plastic container 10 is characterized in that the cover portion 14 and the main plastic container body 12 are welded by a long-wavelength laser having a wavelength of above or equal to 1.0 $\mu$m.

Hereinafter, a detailed description will be given of the transparent plastic container 10 formed by being welded using a long-wavelength laser having a predetermined wavelength for each constituent element.

1. Cover portion

(1) Shape

A shape of the cover portion 14 illustrated in Fig. 1(a), etc. is not particularly restricted. However, it is preferable to have a screw portion, etc. at an outlet of content as cosmetics, etc. or around the outlet, and have a protrusion 14a pressed against an inner wall 12a of the main plastic container body 12.

More specifically, as illustrated in Fig. 1(c), it is preferable that the cover portion 14 is pressed against the inner wall 12a of the main plastic container body 12 having a cylindrical shape, and has the protrusion 14a having an annular (circular) shape extending downward (in a vertical direction) along an edge.

In addition, an annular flange portion 14b is provided immediately above the annular protrusion 14a to extend in a horizontal direction, and is preferably configured to come into contact with an upper surface 12e of the cylindrical main plastic container body 12.

Therefore, a wall portion 14c extending in a perpendicular direction (vertical direction) is included immediately above the annular flange portion 14b as illustrated in Fig. 1(c), and is preferably configured to be in a state of being pressed against an inner wall 16a of a cap 16 as illustrated in Fig. 1(a).

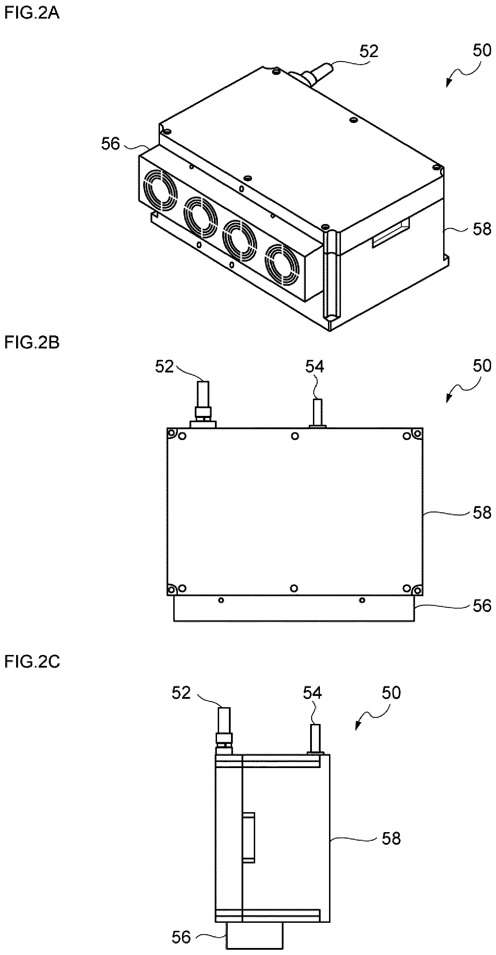

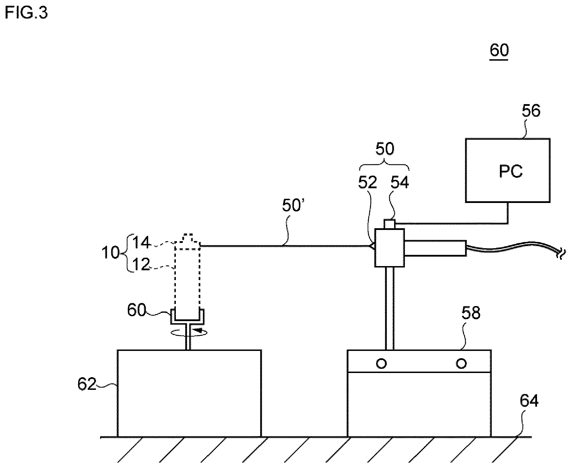

In other words, a reason therefor is that, when the cover portion 14 is configured as described above, excessive deformation or non-uniform welding of a laser welding portion may be effectively prevented without performing pressing using a jig, etc. from the outside at the time of performing laser welding as illustrated in Fig. 3 using a long-wavelength laser irradiation device 50 illustrated in Figs. 2(a) to 2(c).

As illustrated in Fig. 1(c), an opening 14f surrounded with an annular vertical wall 14d is provided around a center of the cover portion 14, a screw portion 14e is provided on an outer circumferential surface of the annular vertical wall 14d, and it is preferable to further include a cap or a spray head (not illustrated) screwed with the screw portion 14e.

Besides, it is preferable to provide a spray head 14', or an inside plug or an inner lid (not illustrated) made of olefin resin between the cover portion 14 and the cap 16 in order to improve usability of the transparent plastic container 10.

(2) Transparent polyester resin

In addition, the transparent polyester resin contained in the cover portion 14 illustrated in Fig. 1(c), etc. preferably contains a predetermined polyester resin as a main component.

Herein, the predetermined polyester resin preferably corresponds to one or a combination of two or more of polycyclohexanedimethylene terephthalate (PCT), alcohol-modified polycyclohexanedimethylene terephthalate (PCTA), glycol-modified polycyclohexanedimethylene terephthalate (PCTG), etc.

A reason therefor is that these polyester resins having a cyclic ring structure may further increase a laser welding property between the cover portion and the main plastic container body when compared to another polyester resin, etc.

Another reason therefor is that, when these polyester resins are used, a cover portion having high transparency and more luxurious feeling may be provided even when a non-carbon black-based black pigment is mixed as a colorant.

Still another reason therefor is that, when these polyester resins are used, mechanical strength, durability, etc. of the cover portion may be significantly improved.

PCT is a polyester resin, in which thermal crystallization is suppressed, formed by allowing dicarboxylic acid containing terephthalic acid as a main component to react with a diol component containing 1,4-cyclohexanedimethanol (CHDM) as a main component. Examples of an article on the market thereof include a polycyclohexylene dimethylene terephthalate (or a thermx polyester resin(trademark) manufactured by Eastman Chemical Company), etc.

In addition, PCTA is a polyester resin, in which thermal crystallization is suppressed, formed by allowing dicarboxylic acid containing terephthalic acid and isophthalic acid as main components with a diol component containing 1,4-cyclohexanedimethanol (CHDM) as a main component. Examples of an article on the market thereof include EastarAN014 and AN004 manufactured by Eastman Chemical Company, etc.

Further, PCTG is a polyester resin, in which thermal crystallization is suppressed, formed by allowing dicarboxylic acid containing terephthalic acid as a main component with a diol component containing 1,4-cyclohexanedimethanol (CHDM) and ethylene glycol as main components. Examples of an article on the market thereof include EastarDN011 and DN004 manufactured by Eastman Chemical Company, etc.

(3) Visible light transmittance

In addition, even though the transparent polyester resin contained in the cover portion 14 is basically transparent, the transparent polyester resin has a predetermined visible light transmitting property by appropriately adjusting a type, a mixed amount, etc. of the colorant to assign luxurious feeling.

Therefore, visible light transmittance (a value measured based on JIS R 3212, for example, a wavelength of 500 nm) is above or equal to 70%, preferably set to a value within a range of 80 to 99.9%, and more preferably set to a value within a range of 90 to 99%.

Further, when the visible light transmittance is controlled within the above-described range, an absorption rate of a long-wavelength laser (for example, a wavelength of 1.0 to 2.2 $\mu$m) may be indirectly controlled to a value above or equal to 70%.

More specifically, a specimen may be set on a spectrophotometer (manufactured by JASCO Corporation, item number: V-570 type), light transmittance of the specimen (thickness: 2 mm) may be measured in a wavelength range of $\lambda$ = 1.2 to 2.2 $\mu$m, and a laser absorption rate may be conveniently calculated from transmittance in a wavelength of 2.0 $\mu$m.

(4) Additive

In addition, it is preferable to mix various additives with the transparent polyester resin contained in the cover portion 14 on the assumption that a predetermined visible light transmittance may be maintained.

More specifically, examples of the additive include one or a combination of two or more of an ultraviolet absorbing agent, an anti-oxidizing agent, a dehydrating agent, a filler, a conductive material, a heat-conductive material, a plasticizer, anhydrous silica, amide wax, isoparaffin, a flame retardant, a functional oligomer, a coupling agent, etc.

In addition, when an additive is added, even though a mixed amount thereof depends on a type of the additive, the mixed amount is preferably set to a value within a range of 0.01 to 20 parts by weight, more preferably set to a value within a range of 0.05 to 8 parts by weight, and even more preferably set to a value within a range of 0.1 to 1 part by weight with respect to 100 parts by weight of the polyester resin.

Moreover, it is found that a laser welding property between the main plastic container body and the cover portion may be controlled when a predetermined amount of an ultraviolet absorbing agent such as 2-[2-hydroxy-3,5-bis($\alpha,\alpha$-dimethylbenzyl)phenyl]-2H-benzotriazole, etc. is mixed, and the ultraviolet absorbing agent is a suitable additive.

2. Main plastic container body

(1) Shape 1

In addition, even though a shape of the main plastic container body 12 illustrated in Figs. 1(a) and 1(b) is not particularly restricted, an external shape thereof is preferably set to a cylindrical shape or a square pillar shape (not illustrated) in consideration of an accommodation property, a disposing property, etc. for content.

Further, in order to maintain the external shape such as the cylindrical shape, etc., and obtain an excellent laser welding property, a wall thickness of a side wall is preferable set to a value within a range of 0.3 to 5 mm, more preferable set to a value within a range of 0.8 to 3 mm, and even more preferable set to a value within a range of 1 to 2 mm.

In addition, as illustrated in Fig. 1(b), it is preferable to smoothen a bottom portion 12d corresponding to a lowest surface of the main plastic container body 12 while having a hollow thick portion 12c in a conic shape (mortar shape) in a lower portion of the cylindrical main plastic container body 12, that is, below the side wall 12b included in the cylindrical external shape.

A reason therefor is that, when the hollow thick portion 12c in the conic shape is provided on the bottom portion 12d corresponding to the lowest surface of the main plastic container body 12, it is possible to exhibit spindle effect, remarkably improve stability of the main plastic container body 12, and effectively prevent falling down even when content is accommodated.

Another reason therefor is that, when the hollow thick portion 12c in the conic shape is included, and when content is taken out, the content may be taken out without leaving residue using a nozzle, etc.

Moreover, when the hollow thick portion 12c in the conic shape is included, light entering the inside of the main body is complicatedly reflected, decorative effect is enhanced, and luxurious feeling as in glass is created.

Therefore, a thickness (t) of the thick portion is preferably set to a value within a range of 8 to 20 mm, more preferably set to a value within a range of 10 to 18 mm, and even more preferably set to a value within a range of 12 to 15 mm.

(2) Shape 2

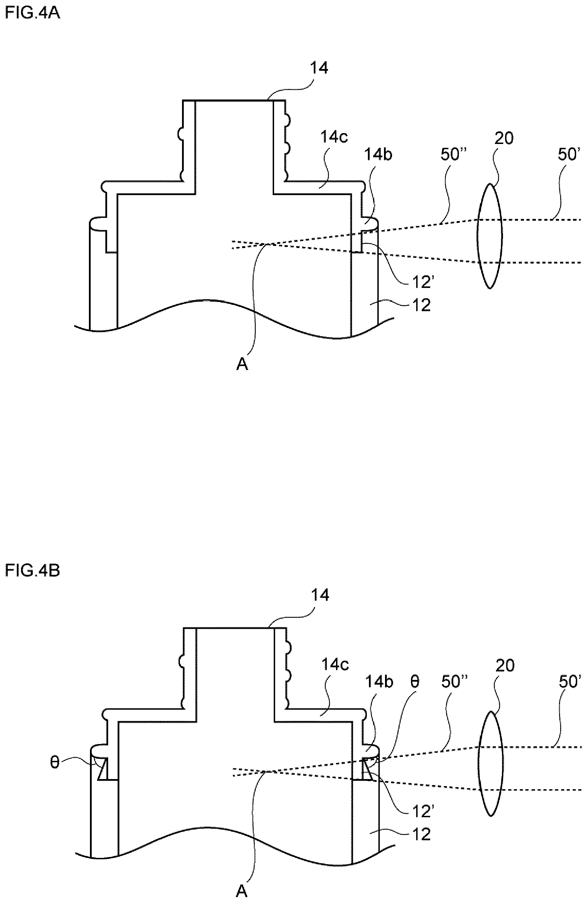

In addition, as illustrated in Fig. 4(b), it is preferable to have an inclined plane to form a space portion in a welding-scheduled portion 12' to be welded to the cover portion 14 on the inner wall of the main plastic container body 12.

In other words, it has been confirmed that resin expands to some extent when transparent polyester resins are laser-welded together, and it is preferable to provide a shape in which the inner wall of the main plastic container body 12 extending in the perpendicular direction is inclined from an inner side to an outer side, that is, a reverse tapered inclined plane, and to include a space portion that absorbs expansion of the transparent polyester resin.

Therefore, based on the reverse tapered inclined plane, as illustrated in Fig. 4(b), an angle ($\theta$) between the inclined plane and an upper end surface in the inner wall of the main plastic container body 12 is preferably set to a value within a range of 45 to 80°, more preferably set to a value within a range of 50 to 75°, and even more preferably set to a value within a range of 55 to 70°.

(3) Transparent polyester resin

In addition, the transparent polyester resin included in the main plastic container body 12 preferably contains, as a main component, one or a combination of two or more of polycyclohexanedimethylene terephthalate, alcohol-modified polycyclohexanedimethylene terephthalate, glycol-modified polycyclohexanedimethylene terephthalate, etc.

A reason therefor is that a laser welding property may be remarkably improved when the same type of suitable polyester resin contained in the cover portion is used.

As described in the foregoing, another reason therefor is that, when a polyester resin having the cyclic ring structure is used, the laser welding property between the cover portion and the main plastic container body may be further enhanced when compared to another polyester resin, etc.

Still another reason therefor is that, when the polyester resin is used, a more colorful main plastic container body having high transparency may be provided even when a colorant is mixed. Further, when the polyester resin is used, mechanical strength, durability, etc. of the main plastic container body may be remarkably improved.

(4) Visible light transmittance

In addition, the transparent polyester resin included in the main plastic container body 12 illustrated in Fig. 1(b) is basically transparent, and thus has a predetermined visible light transmittance.

Therefore, the visible light transmittance of the transparent polyester resin is set to a value above or equal to 70%, preferably set to a value within a range of 80 to 99.9%, and more preferably set to a value within a range of 90 to 99%.

Further, when the visible light transmittance is controlled within the above-described range, an absorption rate of a long-wavelength laser (for example, a wavelength of 1.0 to 2.2 $\mu$m) may be indirectly controlled to a value above or equal to 70%.

(5) Additive

In addition, it is preferable to mix various additives similar to those in the cover portion 14 with the transparent polyester resin included in the main plastic container body 12 in a range in which visible light transmittance may be maintained.

In addition, when an additive is added, even though a mixed amount thereof depends on a type of the additive, the mixed amount is preferably set to a value within a range of 0.01 to 20 parts by weight, more preferably set to a value within a range of 0.05 to 8 parts by weight, and even more preferably set to a value within a range of 0.1 to 1 part by weight with respect to 100 parts by weight of the polyester resin.

Moreover, it is found that a laser welding property between the main plastic container body and the cover portion may be controlled when a predetermined amount of an ultraviolet absorbing agent such as 2-[2-hydroxy-3,5-bis($\alpha,\alpha$-dimethylbenzyl)phenyl]-2H-benzotriazole, etc. is mixed, and the ultraviolet absorbing agent is a suitable additive.

3. Transparent plastic container

(1) Shape

In addition, even though a basic shape of the transparent plastic container 10 including the predetermined cover portion 14 and the main plastic container body 12 is not particularly restricted, the shape is roughly a cylindrical shape having a lid as illustrated in Fig. 1(a) in consideration of an accommodation property, etc. for cosmetics, medicine, etc.

In addition, it is preferable to form a shape having a spiral pattern on the inner surface of the main plastic container body, etc. or to form a shape having a stripe pattern on the inner surface of the main plastic container body, etc. in order to further improve luxurious feeling or decorativeness.

Further, although not illustrated, it is preferable to provide an organic decoration layer, a metal decoration layer, a hot stamp layer, a delustering surface layer, a light reflection layer, etc. to cover the laser welding portion in order to further improve luxurious feeling or decorativeness as the transparent plastic container.

(2) Laser welding portion

In addition, the laser welding portion (welding-scheduled portion) 12' illustrated in Figs. 4(a) and 4(b) is a welding region formed by irradiating the transparent plastic container 10 with a long-wavelength laser in a predetermined direction, for example, from a side as illustrated in Fig. 3 using the long-wavelength laser irradiation device 50 illustrated in Figs. 2(a) to 2(c).

More specifically, the laser welding portion 12' illustrated in Fig. 4(a) is a welding region formed by irradiating the welding-scheduled portion 12' of the cover portion 14 and the main plastic container body 12 with a long-wavelength laser 50' having a wavelength of above or equal to 1.0 $\mu$m while condensing the long-wavelength laser 50' on a predetermined position using a condensing lens 20.

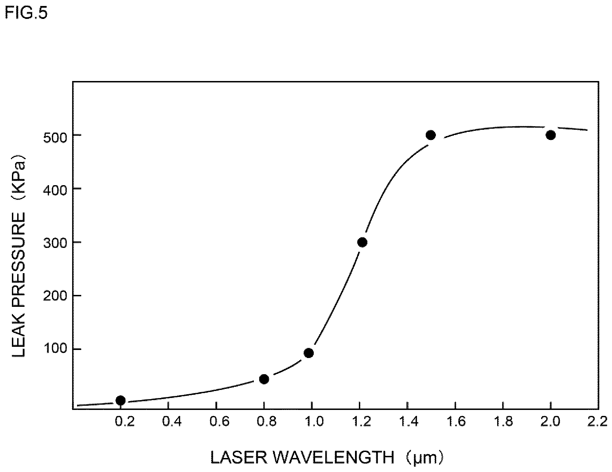

Herein, a reason for using the long-wavelength laser 50' having the wavelength of above or equal to 1.0 $\mu$m will be described by mentioning Fig. 5.

In other words, a horizontal axis of Fig. 5 represents a laser wavelength ($\mu$m), and a vertical axis of Fig. 5 represents a value (kPa) of a leak pressure in the transparent plastic container 10 formed by laser welding.

As a characteristic curve in Fig. 5 indicates, there is a strong correlation between a laser wavelength and a leak pressure in the transparent plastic container, and it can be understood that an excellent laser welding property is obtained when a laser wavelength is above or equal to a predetermined long wavelength.

However, when the wavelength of the long-wavelength laser is excessively large, stable power of the long-wavelength laser is difficult to obtain, a type of a constituent material of the long-wavelength laser is excessively restricted, and thus the long-wavelength laser is difficult to be manufactured at a low price.

Therefore, the wavelength of the long-wavelength laser is set to a value within a range of 1.2 to 2.5 $\mu$m, and preferably set to a value within a range of 1.8 to 2.2 $\mu$m.

It has been confirmed that a similar tendency is obtained even when the vertical axis of Fig. 5 represents a result of a destructive test (based on Example 1, etc.) in the transparent plastic container 10.

Disclosed is a method for producing the plastic container 10 including the cover portion 14 made of the transparent polyester resin and the main plastic container body 12 made of the transparent polyester resin illustrated in Figs. 1(a) to 1(c), and is a method for producing the transparent plastic container 10 characterized by including processes (1) and (2) below.

(1) Process of preparing the cover portion 14 made of the transparent polyester resin and the main plastic container body 12 made of the transparent polyester resin
(2) Process of irradiating the welding-scheduled portion of the cover portion 14 and the main plastic container body 12 with the long-wavelength laser having the wavelength of 1.2 to 2.5 $\mu$m and a power of 6 to 20 W for 6 to 25 seconds to weld the welding-scheduled portion

Hereinafter, the method for producing the transparent plastic container 10 will be described in detail while appropriately omitting content overlapping the above.

1. Process (1)

Process (1) is a process preparing the cover portion 14 made of the transparent polyester resin and the main plastic container body 12 made of the transparent polyester resin illustrated in Figs. 1(a) to 1(c).

In more detail, it is preferable to use a conventionally known injection molding machine, normally set an injection temperature of an injection molding device to a range of 250 to 300°C and an injection pressure thereof to a range of 200 to 800 kgf/cm$^2$, and injection-mode the cover portion and the main plastic container body made of the transparent polyester resin, thereby preparing the cover portion and the main plastic container body.

2. Process (2)

(1) Wavelength/power/irradiation time of long-wavelength laser

Process (2) is a process of irradiating the welding-scheduled portion of the cover portion and the main plastic container body with the long-wavelength laser having the wavelength of 1.2 to 2.5 $\mu$m and a power of 6 to 20 W for 6 to 25 seconds to weld the welding-scheduled portion.

In addition, as illustrated in Fig. 5, when the long-wavelength laser having the wavelength of above or equal to 1.0 $\mu$m is used, even transparent polyester resins may be laser-welded to each other to some extent. For example, a long-wavelength laser having a wavelength of above or equal to 1.2 $\mu$m may perform practical laser welding, and a long-wavelength laser having a wavelength of above or equal to 1.5 $\mu$m may perform strong laser welding.

Conversely, a long-wavelength laser having a wavelength of below 1.0 $\mu$m has difficulty in performing practical laser welding between transparent polyester resins even when an irradiation time or power is appropriately changed.

In addition, the welding-scheduled portion is preferably laser-welded using the predetermined long-wavelength laser irradiation device 50 illustrated in Figs. 2(a) to 2(c) by normally setting long-wavelength laser power to a range of 5 to 40 W and a long-wavelength laser irradiation time to a range of 5 to 30 seconds.

A reason therefor is that, when long-wavelength laser power is below 5 W, laser welding between transparent polyester resins is practically difficult even when irradiation is performed for a long time.

In addition, a reason therefor is that, when long-wavelength laser power is above 40 W, stable power of the long-wavelength laser is difficult to be obtained, a type of a constituent material of the long-wavelength laser is excessively restricted, and thus the long-wavelength laser is difficult to be manufactured at a low price in some cases.

Meanwhile, a reason therefor is that, when an irradiation time of the long-wavelength laser is below 5 seconds, laser welding between transparent polyester resins is insufficient unless long-wavelength laser power is considerably increased.

In addition, a reason therefor is that, when an irradiation time of the long-wavelength laser is above 30 seconds, stable power of the long-wavelength laser is difficult to be obtained, or the welding-scheduled portion is difficult to be uniformly laser-welded in some cases.

Therefore, in accordance with the present invention, the power of the long-wavelength laser is set to a value within a range of 6 to 20 W, and the long-wavelength laser irradiation time is set to a value within a range of 6 to 25 seconds when transparent polyester resins are laser-welded.

Moreover, it is preferable to incorporate a fiber laser as a long-wavelength laser oscillator, and repeat amplification and oscillation while a laser beam passes through an optical fiber including a core and cladding.

A reason therefor is that, when the fiber laser is used, power is easily adjusted merely by changing a length thereof. For example, when the length is set to a range of 10 mm to 300 mm, power in a wide range of 5 to 40 W is easily obtained. Further, the fiber laser is easily treated when compared to another gas laser, etc.

As an example, a type of the optical fiber is preferably set to a single mode having a collimator. Further, a diameter of the optical fiber is preferably set to a value within a range of 2 to 20 mm, and a length of the optical fiber is preferably set to a value within a range of 10 mm to 300 mm.

In addition, more preferably, the diameter of the optical fiber is set to a value within a range of 80 $\mu$m to 10 mm, and the length of the optical fiber is set to a value within a range of 10 cm to 5 m.

Besides, when the fiber laser is used, it is possible to continuously emit a long-wavelength laser, or to emit a pulse-type long-wavelength laser turned ON/OFF at a switching time of 10 to 500 $\mu$sec.

(2) Long-wavelength laser irradiation method

Next, a long-wavelength laser irradiation method will be described while mentioning Fig. 3.

In more detail, the long-wavelength laser irradiation device 50 may be prepared above a support member 64, and the transparent plastic container 10 may be attached to a holder 60 in the perpendicular direction while the main plastic container body 12 is pressed against an inner wall of the cover portion 14, thereby finishing preparation.

Subsequently, only the welding-scheduled portion 12' may be laser-welded using a pinpoint, and set as a laser welding portion by irradiating the transparent plastic container 10 from a side thereof with a long-wavelength laser having a predetermined wavelength of above or equal to 1.2 $\mu$m from the long-wavelength laser irradiation device 50, for example, a semiconductor laser device (also including the fiber laser) or a vertical-cavity surface-emitting laser (VCSEL) while rotating the transparent plastic container 10 attached to the holder 60 at 5 to 50 revolutions per minute (rpm) using a rotating motor 62.

Herein, when a voltage is applied, GaInNAsSb, InGaAsP/InP, GaInNAs/GaAs, erbium YAG, holmium YAG, etc. is suitable as a semiconductor material that oscillates a long-wavelength laser.

Further, in the case of the fiber laser, a semiconductor material containing a semiconductor material (glass material) as a main agent and a three-level element such as erbium, neodymium, ytterbium, etc. as a doping agent is suitable for a core portion that oscillates a long-wavelength laser.

For example, it has been confirmed that a long-wavelength laser having a wavelength of 1.55 $\mu$m may be obtained in the case of a semiconductor material doped with erbium.

Further, it has been confirmed that a long-wavelength laser having a wavelength of 1.08 $\mu$m may be obtained in the case of a semiconductor material doped with ytterbium.

In addition, in the case of the long-wavelength laser irradiation device 50, it is preferable to adjust a position of a laser irradiation unit 52 using an XY table 58 to which the long-wavelength laser irradiation device 50 is attached such that a focal position of a laser beam corresponds to a predetermined place, and to visually check a state of the laser beam and a state of an irradiation surface of the laser beam using a CCD camera 54 attached to a monitor/PC control device 56.

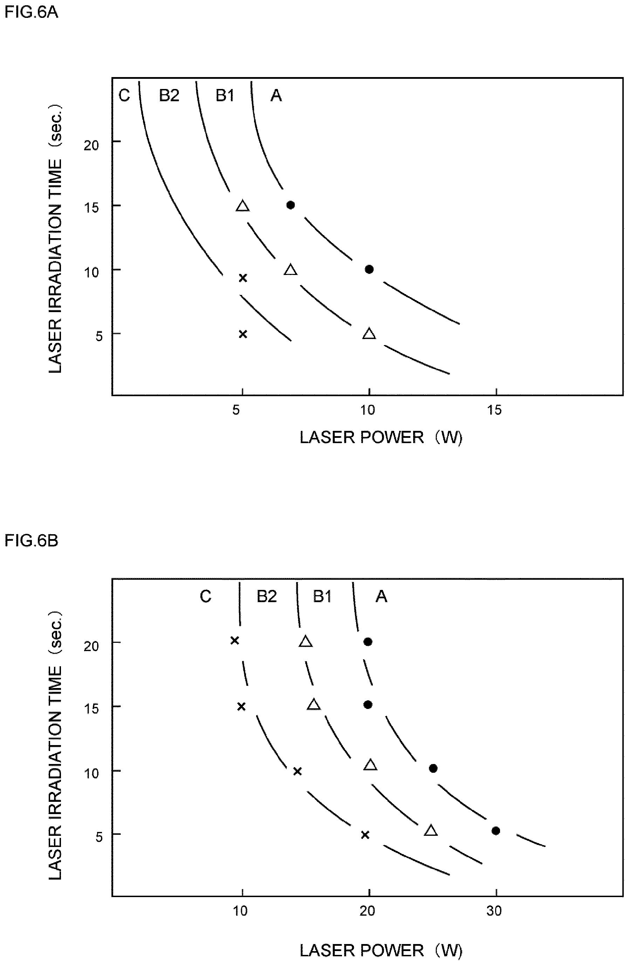

Therefore, as illustrated in Fig. 6(a), a range of an irradiation condition (for example, zone A, zone B1, zone B2, and zone C) is obtained by appropriately adjusting power and an irradiation time of a long-wavelength laser, and the irradiation condition indicates an excellent laser welding property (○: destructive test most excellent (10 samples passed among n = 10 samples), Δ: destructive test excellent (8 to 9 samples passed among n = 10 samples), ✕: destructive test partially poor (7 or fewer samples passed among n = 10 samples) in the transparent plastic container.

Meanwhile, as illustrated in Fig. 6(b), in the case of a plastic container formed by using a short-wavelength laser (0.2 μm), and mixing 0.3 wt.% of carbon black with 100 wt.% of the transparent polyester resin included in the cover portion, a result in which high power is obviously required is obtained when compared to the case of the long-wavelength laser.

(3) Rotation driving

In addition, as illustrated in Fig. 3, a predetermined long-wavelength laser is preferably emitted using the long-wavelength laser irradiation device 50 while the cover portion 14 and the main plastic container body 12 are rotated in a fit state.

A reason therefor is that, when a long-wavelength laser is emitted while the transparent plastic container 10 is in a rotated state as described above, a laser beam is uniformly emitted, and a predetermined laser welding property may be obtained while effectively preventing occurrence of blistering or deformation in the laser welding portion.

More specifically, it is preferable to prepare the long-wavelength laser irradiation device 50 above the support member 64 illustrated in Fig. 3, attach the transparent plastic container 10 to the holder 60 in the perpendicular direction while the main plastic container body 12 is pressed against the inner wall of the cover portion 14, emit a long-wavelength laser beam from the laser irradiation unit 52 of the laser irradiation device 50 while the transparent plastic container 10 is rotated at 5 to 50 rpm using the rotating motor 62 connected to the holder 60, and irradiate the transparent plastic container 10 from a side thereof with the long-wavelength laser beam.

(4) Light condensing property

In addition, when a long-wavelength laser is emitted, it is preferable to emit the long-wavelength laser through the condensing lens 20 illustrated in Figs. 4(a) and 4(b).

A reason therefor is that, when a long-wavelength laser 50" is emitted through the condensing lens 20, a laser absorbing property in a welding-scheduled portion corresponding to a laser welding portion may be controlled, and a predetermined laser welding property may be obtained while preventing occurrence of blistering or deformation.

More specifically, as illustrated in Figs. 4(a) and 4(b), it is preferable to prepare the laser irradiation device 50 formed by including the condensing lens 20, and emit a long-wavelength laser beam from a side while the main plastic container body 12 is pressed against the inner wall of the cover portion 14.

Although not illustrated, it is preferable to fix the condensing lens 20 onto an operation table, and allow the operation table to move in a three-dimensional (3D) direction corresponding to XYZ directions in order to adjust a focal position, etc.

(5) Focal position

In addition, as illustrated in Figs. 4(a) and 4(b), it is preferable to emit the long-wavelength laser 50' while condensing the long-wavelength laser 50', and to have a focal position (A) of the long-wavelength laser behind the welding-scheduled portion 12', that is, at a position in a direction away from the long-wavelength laser irradiation device 50.

A reason therefor is that, when the focal position of the long-wavelength laser is considered, a laser absorbing property in the laser welding portion may be controlled, and a predetermined laser welding property may be obtained while preventing occurrence of blistering or deformation.

More specifically, as illustrated in Figs. 4(a) and 4(b), it is preferable to prepare the laser irradiation device 50 formed by including the condensing lens 20, hold the main plastic container body 12 and the cover portion 14 while the main plastic container body 12 is pressed against the inner wall of the cover portion 14, and dispose the welding-scheduled portion 12' positioned between the focal position (A) of the long-wavelength laser and the condensing lens 20.

[Examples]

Hereinafter, the invention will be described in more detail using Examples. However, the invention below illustratively describes the invention, and the invention is not restricted to the description.

[Example 1]

1. Production of transparent plastic container

(1) Process (1)

EastarAN014 (manufactured by Eastman Chemical Company) corresponding to PCTA as a polyester resin was mixed using an injection molding device, and the cover portion 14 illustrated in Fig. 1(c) was injection-molded.
In more detail, an injection temperature of the injection molding device was set to 280°C, and an injection pressure thereof was set to 500 kgf/cm$^2$ to manufacture the cover portion made of the transparent polyester resin (visible light transmittance in wavelength of 1.9 μm: 99%, laser absorption rate: 70%) illustrated in Fig. 1(c).
In addition, similarly, the main plastic container body (external diameter: 44.5 mm, volume: 120 ml) illustrated in Fig. 1(b) was injection-molded from EastarAN014 (manufactured by Eastman Chemical Company) corresponding to PCTA as a polyester resin using the injection molding device.
In more detail, an injection temperature of the injection molding device was set to 280°C, and an injection pressure thereof was set to 500 kgf/cm$^2$ to produce the main plastic container body made of a colored transparent polyester resin (visible light transmittance in wavelength of 1.9 μm: 99%, laser absorption rate: 70%) illustrated in Fig. 1(a).

(2) Process (2)

Subsequently, the protrusion of the cover portion was irradiated with a long-wavelength laser beam in a predetermined condition through a portion of the inner wall of the main plastic container body using the laser irradiation device illustrated in Figs. 2(a) to 2(c) (model: AP-CW1-MOD (manufactured by AdValue Photonics, Inc.)), and laser welding was performed, thereby forming a transparent plastic container of Example 1.
In more detail, as illustrated in Fig. 3, the laser irradiation device 50 was prepared above the support member 64, and the transparent plastic container 10 was attached to the holder 60 in the perpendicular direction while the main plastic container body 12 was pressed against the inner wall of the cover portion 14.
Subsequently, the transparent plastic container 10 was irradiated with a long-wavelength pulse laser beam (wavelength: 1.9 μm, laser power: 10 W) turned ON/OFF at an interval time of 100 μsec for 15 seconds from the laser irradiation unit 52 of the laser irradiation device 50 while being rotated at 12 rpm by the rotating motor 62.
In other words, the transparent plastic container 10 was obtained using laser welding while the welding-scheduled portion 12' was disposed to be positioned between the focal position (A) of the long-wavelength laser and the condensing lens 20.
In addition, in the case of the laser irradiation device 50, a position of the irradiation unit 52 was adjusted using the XY table 58 of the laser irradiation device 50 such that the focal position (A) of the long-wavelength laser beam is present behind the laser welding portion corresponding to the welding-scheduled portion 12', and a state of the laser beam and a state of an irradiation surface of the laser beam was visually checked using the CCD camera 54 attached to the monitor/PC control device 56.

2. Evaluation of transparent plastic container

(1) External appearance

The laser welding portion (welding-scheduled portion) of the obtained transparent plastic container was visually observed, and an external appearance thereof was evaluated using a criterion below.

⊙ (Very good:VG): bubble or deformation is not observed at all
○ (Good:G) : bubbles or deformation is rarely observed
△ (Fair:F) : bubbles or deformation is slightly observed
✕ (Bad:B) : a lot of bubbles or noticeable deformation is observed

(2) Laser welding property 1 (leak pressure)

Compressed air was inserted into the obtained transparent plastic container using a compressor such that a set pressure is obtained every 10 kPa, the set pressure is reached in 5 seconds, and the set pressure is maintained without change for 10 seconds until an internal pressure becomes 560 kPa.
In addition, the internal pressure obtained when a pressure difference between a pressure (pressure 1), which is obtained after 10 seconds from when a compressing valve led from the compressor is blocked, and a pressure (pressure 2), which is obtained after 30 seconds from when the compressing valve is blocked, becomes ±40 kPa was set to a leak pressure, and then a laser welding property was evaluated based on a criterion below.

⊙ (Very good:VG) : leak pressure is above or equal to 500 kPa
○ (Good:G) : leak pressure is above or equal to 480 kPa
Δ (Fair:F): leak pressure is above or equal to 460 kPa
× (Bad:B) : leak pressure is below 460 kPa

(3) Laser welding property 2 (destructive test)

Compressed air was inserted into the obtained transparent plastic container using the compressor such that the internal pressure changes from 100 kPa to 560 kPa, a pressure (maximum: 560 kPa) was measured until the laser welding portion was damaged, and then a laser welding property was evaluated based on a criterion below.

⊙ (Very good:VG) : laser welding portion is not damaged even when pressure is above or equal to 560 kPa
○ (Good:G) : laser welding portion is not damaged even when pressure is above or equal to 500 kPa
Δ (Fair:F) : laser welding portion is not damaged even when pressure is above or equal to 450 kPa
× (Bad:B) : laser welding portion is damaged when pressure is below 450 kPa

[Example 2]

In Example 2, a transparent plastic container was produced using laser welding similarly to Example 1 except that an irradiation time of the long-wavelength laser device was set to 10 seconds, and a laser welding property, etc. was evaluated. An obtained result is shown in Table 1.

[Example 3]

In Example 3, a transparent plastic container was produced using laser welding similarly to Example 1 except that power of the laser device was set to 7 W, and an irradiation time was set to 15 seconds, and a laser welding property, etc. was evaluated. An obtained result is shown in Table 1.

[Example 4](not in accordance with the invention)

In Example 4, a transparent plastic container was produced using laser welding similarly to Example 1 except that power of the laser device was set to 5 W, and an irradiation time was set to 15 seconds, and a laser welding property, etc. was evaluated. An obtained result is shown in Table 1.

[Examples 5 to 8] (Example 8 being not in accordance with the invention)

In Examples 5 to 8, a plastic container was produced using laser welding similarly to Examples 1 to 4 except that a wavelength of an emitted long-wavelength laser was decreased to 1.2 μm or 1.4 μm from 1.9 μm, and laser power and an irradiation time were changed, and a laser welding property, etc. was evaluated. An obtained result is shown in Table 1.

[Comparative Example 1]

In Comparative Example 1, a plastic container was produced using laser welding similarly to Example 1 except that carbon particles were mixed with the transparent polyester resin included in the cover portion such that the carbon particles correspond to 1 wt.% with respect to the whole amount, and a laser welding property, etc. was evaluated. An obtained result is shown in Table 1.

[Comparative Example 2]

In Comparative Example 2, a plastic container was produced using laser welding similarly to Example 1 except that a wavelength of an emitted long-wavelength laser was decreased to 0.8 μm from 1.9 μm, and a laser welding property, etc. was evaluated. An obtained result is shown in Table 1.

[Comparative Example 3]

In Comparative Example 3, a plastic container was produced using long-wavelength laser welding similarly to Example 1 except that a wavelength of an emitted long-wavelength laser was decreased to 0.2 μm from 1.9 μm, and a laser welding property, etc. was evaluated. An obtained result is shown in Table 1.

[Table 1]

| | Visible light transmittance (%) | | Long wavelength (μm) | Power (W) | Time (sec.) | External appearance | Welding property 1 | Welding property 2 |
|---|---|---|---|---|---|---|---|---|
| | Cover portion | Main body | | | | | | |
| Example 1 | 100 | 100 | 1.9 | 10 | 15 | ⊙ | ⊙ | ⊙ |
| Example 2 | 100 | 100 | 1.9 | 10 | 10 | ⊙ | ○ | ⊙ |
| Example 3 | 100 | 100 | 1.9 | 7 | 15 | ⊙ | ⊙ | ⊙ |
| Example 4 | 100 | 100 | 1.9 | 5 | 15 | ○ | ○ | ○ |
| Example 5 | 100 | 100 | 1.4 | 10 | 10 | ○ | ○ | ⊙ |
| Example 6 | 100 | 100 | 1.4 | 10 | 15 | ○ | ○ | ○ |
| Example 7 | 100 | 100 | 1.2 | 10 | 20 | ⊙ | ○ | ⊙ |
| Example 8 | 100 | 100 | 1.2 | 10 | 5 | ○ | ○ | ○ |
| Comparative Example 1 | 0 | 100 | 1.9 | 10 | 15 | ○ | ○ | ⊙ |
| Comparative Example 2 | 100 | 100 | 0.8 | 10 | 15 | - | × | × |
| Comparative Example 3 | 100 | 100 | 0.2 | 10 | 15 | - | × | × |
| * In the Table, a symbol "-" means that laser welding may not be performed, and evaluation may not be conducted. | | | | | | | | |

INDUSTRIAL APPLICABILITY

According to a transparent plastic container and a method for producing the same of the invention, even a combination of a plastic container/cover made of a transparent polyester resin may be stably laser-welded in a short time without mixing a significant quantity of a laser absorber by considering a wavelength, etc. of a laser to be used.

EXPLANATIONS OF LETTERS OR NUMERALS

10:     transparent plastic container
12:     main plastic container body
12':    laser welding portion (welding-scheduled portion)
14:     cover portion
16:     cap
20:     condensing lens
50:     long-wavelength laser irradiation device
52:     laser irradiation unit
54:     CCD camera
56:     monitor/PC control device
58:     XY table of laser irradiation device
60:     holder of transparent plastic container
62:     rotating motor
64:     support member

**Claims**

1. A method for producing a transparent plastic container (10) including a cover portion (14) made of a transparent polyester resin having a visible light transmittance, measured in accordance with JIS R 3212, of above or equal to 70% and a main plastic container body (12) made of a transparent polyester resin having a visible light transmittance, measured according to the same standards, of above or equal to 70%, the method comprising:

   a process (1) of preparing the cover portion (14) made of the transparent polyester resin and the main plastic container body (12) made of the transparent polyester resin; and
   a process (2) of irradiating a welding-scheduled portion (12') of the cover portion (14) and the main plastic container body (12) with a long-wavelength laser (50) having a wavelength of 1.2 to 2.5 μm and a power of 6 to 20 W for 6 to 25 seconds to weld the welding-scheduled portion (12').

2. The method for producing a transparent plastic container (10) according to claim 1, wherein the cover portion (14) has a protrusion pressed against an inner wall of the main plastic container body (12), and the protrusion is welded to a portion of the inner wall of the main plastic container body (12) by condensed light of the long-wavelength laser (50).

3. The method for producing a transparent plastic container (10) according to claim 1 or claim 2, wherein a long-wavelength laser transmittance is set to a value below or equal to 30% in the transparent polyester resin included in the cover portion (14) and the transparent polyester resin included in the main plastic container body (12), or in one of the transparent polyester resins.

4. The method for producing a transparent plastic container (10) according to any one of claims 1 to 3, wherein the transparent polyester resin included in the cover portion (14) and the transparent polyester resin included in the main plastic container body (12), or one of the transparent polyester resins contains at least one of polycyclohexanedimethylene terephthalate, alcohol-modified polycyclohexanedimethylene terephthalate, and glycol-modified polycyclohexanedimethylene terephthalate as a main component.

5. The method for producing a transparent plastic container (10) according to any one of claims 1 to 4, wherein the long-wavelength laser (50) is emitted while the cover portion (14) and the main plastic container body (12) are rotated in a press-fitting state.

6. The method for producing a transparent plastic container (10) according to any one of claims 1 to 5, wherein the long-wavelength laser (50) is emitted through a condensing lens (20).

7. The method for producing a transparent plastic container (10) according to any one of claims 1 to 6, wherein the long-wavelength laser (50) is emitted while being condensed, and a focal point of the long-wavelength laser (50) is formed behind the welding-scheduled portion (12').

**Patentansprüche**

1. Verfahren zur Herstellung eines transparenten Kunststoffbehälters (10), welcher einen Abdeckabschnitt (14), hergestellt aus einem transparenten Polyesterharz mit einer Durchlässigkeit für sichtbares Licht, gemessen im Einklang mit JIS R 3212, von über oder gleich 70% und einen Kunststoffbehälterhauptkörper (12), hergestellt aus einem transparenten Polyesterharz mit einer Durchlässigkeit für sichtbares Licht, gemessen gemäß den gleichen Standards, von über oder gleich 70%, einschließt, wobei das Verfahren umfaßt:

   ein Verfahren (1) des Herstellens des Abdeckabschnitts (14), hergestellt aus dem transparenten Polyesterharz, und des Kunststoffbehälterhauptkörpers (12), hergestellt aus dem transparenten Polyesterharz, und
   ein Verfahren (2) des Belichtens eines schweißvorgesehenen Abschnitts (12') des Abdeckabschnitts (14) und des Kunststoffbehälterhauptkörpers (12) mit einem langwelligen Laser (50) mit einer Wellenlänge von 1,2 bis 2,5 μm und einer Leistung von 6 bis 20 W für 6 bis 25 Sekunden, um den schweißvorgesehenen Abschnitt (12') zu schweißen.

2. Verfahren zur Herstellung eines transparenten Kunststoffbehälters (10) gemäß Anspruch 1, wobei der Abdeckabschnitt (14) einen Vorsprung gedrückt gegen eine Innenwand des Kunststoffbehälterhauptkörpers (12) aufweist, und der Vorsprung an einen Abschnitt der Innenwand des Kunststoffbehälterhauptkörpers (12) mittels kondensiertem Licht des langwelligen Lasers (50) geschweißt wird.

3. Verfahren zur Herstellung eines transparenten Kunststoffbehälters (10) gemäß Anspruch 1 oder Anspruch 2, wobei eine Durchlässigkeit des langwelligen Lasers eingestellt wird auf einen Wert von unterhalb oder gleich 30% in dem transparenten Polyesterharz, eingebracht in den Abdeckabschnitt (14), und dem transparenten Polyesterharz, eingebracht in den Kunststoffbehälterhauptkörper (12), oder in einem der transparenten Polyesterharze.

4. Verfahren zur Herstellung eines transparenten Kunststoffbehälters (10) gemäß einem der Ansprüche 1 bis 3, wobei das transparente Polyesterharz, eingebracht in den Abdeckabschnitt (14), und das transparente Polyesterharz, eingebracht in den Kunststoffbehälterhauptkörper (12), oder einem der transparenten Polyesterharze mindestens eines von Polycyclohexandimethylterephthalat, Alkohol-modifiziertem Polycyclohexandimethylenterephthalat und Glycol-modifiziertem Polycyclohexandimethylenterephthalat als eine Hauptkomponente enthält.

5. Verfahren zur Herstellung eines transparenten Kunststoffbehälters (10) nach einem der Ansprüche 1 bis 4, wobei der langwellige Laser (50) emittiert wird, während der Abdeckabschnitt (14) und der Kunststoffbehälterhauptkörper (12) in einem Press-Fitting-Zustand rotiert werden.

6. Verfahren zur Herstellung eines transparenten Kunststoffbehälters (10) gemäß einem der Ansprüche 1 bis 5, wobei der langwellige Laser (50) durch eine Kondensationslinse (20) emittiert wird.

7. Verfahren zur Herstellung eines transparenten Kunststoffbehälters (10) gemäß einem der Ansprüche 1 bis 6, wobei der langwellige Laser (50) emittiert wird, während er kondensiert wird, und ein Fokalpunkt des langwelligen Lasers (50) hinter dem schweißvorgesehenen Abschnitt (12') gebildet wird.

**Revendications**

1. Procédé de production d'un contenant en plastique transparent (10) comprenant une partie de couvercle (14) constituée d'une résine de polyester transparent ayant une transmittance de la lumière visible, mesurée selon JIS R 3212, supérieure ou égale à 70% et un corps principal de contenant en plastique (12) constitué d'une résine de polyester transparent ayant une transmittance de la lumière visible, mesurée selon la même norme, supérieure ou égale à 70%, le procédé comprenant :

   un processus (1) de préparation de la partie de couvercle (14) constituée d'une résine de polyester transparent et du corps principal de contenant en plastique (12) constitué de la résine de polyester transparent, et
   un processus (2) d'irradiation d'une partie de soudage (12') de la partie de couvercle (14) et du corps principal de contenant en plastique (12) avec un laser à longue longueur d'onde (50) ayant une longueur d'onde allant de 1,2 à 2,5 $\mu$m et une puissance allant de 6 à 20 W pendant 6 à 25 secondes pour souder la partie de soudage (12').

2. Procédé de production d'un contenant en plastique transparent (10) selon la revendication 1, dans lequel la partie de couvercle (14) présente une saillie pressée contre une paroi intérieure du corps principal de contenant en plastique (12), et la saillie est soudée à une partie de la paroi intérieure du corps principal de contenant en plastique (12) par la lumière condensée du laser à longue longueur d'onde (50).

3. Procédé de production d'un contenant en plastique transparent (10) selon la revendication 1 ou 2, dans lequel la transmittance du laser à longue longueur d'onde est réglée à une valeur inférieure ou égale à 30% dans la résine de polyester transparent dans la partie de couvercle (14) et la résine de polyester transparent dans le corps principal de contenant en plastique (12), ou dans l'une des résines de polyester transparent.

4. Procédé de production d'un contenant en plastique transparent (10) selon l'une quelconque des revendications 1 à 3, dans lequel la résine de polyester transparent présente dans la partie de couvercle (14) et la résine de polyester transparent présente dans le corps principal de contenant en plastique (12), ou l'une des résines de polyester transparent contient au moins l'un du poly(téréphtalate de cyclohexanediméthylène), du poly(téréphtalate de cyclohexanediméthylène) modifié par un alcool, et du poly(téréphtalate de cyclohexanediméthylène) modifié par un glycol, comme composant principal.

**5.** Procédé de production d'un contenant en plastique transparent (10) selon l'une quelconque des revendications 1 à 4, dans lequel le laser à longue longueur d'onde (50) émet lorsque la partie de couvercle (14) et le corps principal de contenant en plastique (12) sont dans un état d'engagement par pression.

**6.** Procédé de production d'un contenant en plastique transparent (10) selon l'une quelconque des revendications 1 à 5, dans lequel le laser à longue longueur d'onde (50) émet au travers d'une lentille de condensation (20).

**7.** Procédé de production d'un contenant en plastique transparent (10) selon l'une quelconque des revendications 1 à 6, dans lequel le laser à longue longueur d'onde (50) émet en étant condensé, et un point focal du laser à longue longueur d'onde (50) est formé derrière la partie de soudage (12').

FIG.1A                                                              10

14
16
16a

12

FIG.1B

12e
12a

12b

12

12c

t

12d

FIG.1C                    14f                              14

14e
14d

14c

14b
14a

FIG.2A

FIG.2B

FIG.2C

FIG.3

FIG.4A

FIG.4B

FIG.5

FIG.6A

FIG.6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4040463 B
- JP 4734303 B
- JP 2013203052 A
- EP 2505338 A1